# FASCICULE DE BREVET EUROPEEN

(11) **EP 2 794 367 B1**
(45) Date de publication et mention de la délivrance du brevet: **27.02.2019**
(21) Numéro de dépôt: 12805513.4
(22) Date de dépôt: 10.12.2012
(51) Int. Cl.: B60S 1/50, B60S 1/38

(54) **COMPOSANT PLASTIQUE ET THERMOCONDUCTEUR D'UN SYSTEME D'APPROVISIONNEMENT ET/OU DE DISTRIBUTION EN LIQUIDE LAVE GLACE DE VEHICULE AUTOMOBILE**
WÄRMELEITENDES KUNSTSTOFFBAUTEIL FÜR EIN SYSTEM ZUR ZUFUHR VON UND/ODER VERTEILUNG EINER SCHEIBENWASCHFLÜSSIGKEIT FÜR EIN KRAFTFAHRZEUG
PLASTIC HEAT-CONDUCTING COMPONENT FOR A SYSTEM FOR SUPPLYING AND/OR DISTRIBUTING A WINDOW-WASHING LIQUID FOR A MOTOR VEHICLE

(30) Priorité: 19.12.2011 FR 1161868
(43) Date de publication de la demande: 29.10.2014
(73) Titulaire: Valeo Systèmes d'Essuyage, 78322 Le Mesnil Saint Denis (FR)
(72) Inventeur: CAILLOT, Gérald, F-78720 Cernay La Ville (FR); IZABEL, Vincent, F-91380 Chilly Mazarin (FR); JARASSON, Jean-Michel, F-78321 Le Mesnil Saint Denis (FR)
(74) Mandataire: Callu-Danseux, Violaine
(86) Numéro de dépôt international: PCT/EP2012/074908
(87) Numéro de publication internationale: WO 2013/092266

(56) Documents cités:
- EP-A2- 1 777 452
- WO-A1-2010/034447
- WO-A1-2011/032679
- FR-A1- 2 634 709

## Description

Le secteur technique de la présente invention est celui des systèmes d'approvisionnement et/ou de distribution en liquide lave glace pour véhicule automobile. Un tel système accompagne une installation d'essuyage des vitres du véhicule.

Les automobiles sont couramment équipées d'installation d'essuyage et de système de lavage pour assurer un essuyage et un lavage du pare-brise et éviter que la vision qu'a le conducteur de son environnement soit perturbée. Ces installations d'essuyage comprennent des bras effectuant un mouvement de va-et-vient angulaire au bout desquels sont installés des balais allongés, porteurs eux-mêmes de lames racleuses réalisées en une matière élastique. Ces lames frottent contre le pare-brise et évacuent l'eau en l'amenant en dehors du champ de vision du conducteur. Le balai est rattaché au bras tournant de l'essuie-glace par un ensemble constitué d'un connecteur mécanique et d'un adaptateur. Le connecteur est une pièce qui est fixée directement sur la structure du balai, l'adaptateur étant une pièce intermédiaire qui permet la fixation du connecteur sur le bras de l'essuie-glace. Ces deux pièces sont reliées l'une à l'autre par un axe transversal qui autorise leur rotation relative.

Les systèmes de lavage comprennent un dispositif d'amenée d'un liquide lave-vitre qui est acheminé depuis un réservoir situé dans le véhicule et qui est projeté en direction du pare-brise par des gicleurs situés généralement sur le capot, sur la grille de baie de pare-brise ou sur l'essuie-glace lui-même pour une meilleure distribution du liquide. Dans le cas de buses placées sur les balais, le liquide lave-vitre est acheminé, avant d'être réparti entre elles, par des canalisations qui sont fixées sur le bras de l'essuie-glace et qui sont raccordées à un système de distribution du balai au niveau du connecteur. Le connecteur comporte ainsi des orifices aptes à recevoir, par une liaison étanche, les embouts desdites canalisations.

Lorsque la température du liquide lave-glace est trop basse, par exemple en-dessous de 5°C, on chauffe le liquide lave-glace. Pour cela, une conduite de transport réchauffe le liquide lave-glace prélevé dans un réservoir par une pompe au moment ou l'on actionne la commande du lave-glace, généralement par le levier de commande placé à côté du volant et contrôlant entre autre l'actionnement des essuie-glaces.

Des éléments de raccordement sont installés entre des portions de conduite de transport de liquide. De tels éléments de raccordement ne sont pas chauffés et sont ainsi susceptibles de former une zone froide, où le liquide gèle. Cette situation est gênante car ce gel, en des endroits discrets et difficiles d'accès du système d'approvisionnement et/ou de distribution de liquide, peut rendre la fonction de lavage totalement indisponible.

Le document WO 2011/032679 A1 propose une solution à ce problème en installant un moyen de chauffage électrique dans l'élément de raccordement. Or, la disposition de ce moyen de chauffage ne résout pas le problème technique de manière satisfaisante. En effet, la distance qui sépare le moyen de chauffage des conduits à dégeler est relativement importante, si bien que le temps nécessaire pour dégeler les canaux de l'élément de raccordement n'est pas compatible avec le niveau de service attendu par un utilisateur du véhicule, notamment quand celui-ci est un véhicule haut de gamme. Ceci représente un premier inconvénient.

Par ailleurs, la disposition ponctuelle du moyen de chauffage implique une puissance électrique importante pour réussir à dégeler les canaux. Une telle puissance est problématique car elle implique un réseau électrique dimensionné pour une telle puissance. Ceci forme un deuxième inconvénient.

L'invention se propose d'améliorer la situation.

Le but de la présente invention est donc de résoudre les inconvénients décrits ci-dessus principalement en réalisant les composants du système d'approvisionnement et/ou de distribution en liquide situés en amont, en aval ou entre les conduits, dans un matériau plastique spécialement agencé pour conduire les calories et les transmettre au liquide présent dans une zone ménagée dans le composant, cette zone formant notamment une zone de stockage ou une zone de circulation dans lequel le liquide peut être contenu ou peut circuler.

L'invention a donc pour objet un composant d'un système d'approvisionnement et/ou de distribution en liquide d'une installation d'essuyage pour véhicule automobile, comprenant un espace délimité par une paroi dans lequel le liquide est apte à s'étendre, caractérisé en ce que la paroi est réalisée en un matériau plastique thermoconducteur. Par matériau plastique, on entend un matériau polymérique synthétique.

Selon l'invention, le matériau plastique présente une diffusivité thermique supérieure ou égale à 0.00019 m²/s.

Selon une deuxième caractéristique de l'invention, le matériau plastique est un polyéthylène chargé, notamment de nanofibres.

De manière optionnelle, le matériau plastique thermoconducteur est également électriquement isolant.

Selon une première variante de l'invention, le composant est un réservoir de rétention du liquide, ladite paroi du réservoir comprenant au moins un orifice de remplissage dudit espace en liquide et au moins un trou apte à recevoir une pompe de mise en circulation du liquide dans le système d'approvisionnement et/ou de distribution. Un tel réservoir est le contenant qui retient une quantité de liquide à utiliser lors des multiples utilisations de la fonction lave-glace. Ce réservoir étant susceptible de geler, l'invention propose de réaliser la paroi de ce réservoir en plastique thermoconducteur de sorte à dissiper les calories tout autour du volume constitué par le stock de liquide présent dans le réservoir.

Selon une deuxième variante alternative ou complémentaire, le composant est une pompe de mise en circulation du liquide dans le système d'approvisionnement et/ou de distribution. Une telle pompe comprend un corps qui loge un moteur électrique et une turbine, le corps de la pompe étant alors réalisé en un matériau plastique thermoconducteur. Avantageusement, seule la portion du corps entourant la turbine est réalisée en un tel matériau.

Selon une troisième variante alternative ou complémentaire aux variantes précédentes, le composant est un raccord hydraulique entre la pompe de mise en circulation du liquide et au moins un tube de transport et de chauffage du liquide constitutif du système d'approvisionnement et/ou de distribution en liquide. Un tel tube comprend au moins un élément chauffant et cet élément chauffant forme une source calorifique à partir de laquelle le raccord hydraulique tire les calories qu'il draine vers un unique espace délimité par la paroi du raccord, cet espace formant un canal de circulation de liquide.

Selon une quatrième variante alternative ou complémentaire aux variantes précédentes de l'invention, le composant est un dispositif de raccordement dans lequel l'espace est en communication avec au moins une entrée de liquide et au moins une sortie de liquide, ledit espace logeant au moins un clapet anti-retour. Avantageusement, l'espace est en communication avec deux sorties pour alimenter deux canalisations ménagé dans le tube ou le conduit. Un tel dispositif de raccordement est une pièce intermédiaire située entre un tube raccordé à la pompe de mise en circulation et au moins un conduit de transport et de chauffage du liquide raccordé au balai d'essuyage. Un tel dispositif de raccordement assure ainsi la transition entre une première partie du système située sous un capot du véhicule et une deuxième partie située à l'extérieur du véhicule, cette dernière partie longeant les bras de l'installation d'essuyage.

Selon une cinquième variante alternative ou complémentaire aux variantes précédentes, le composant est un support du dispositif de raccordement, ledit support comprenant au moins un dispositif de fixation apte à solidariser un connecteur électrique d'alimentation d'un élément chauffant constitutif du système d'approvisionnement et/ou de distribution. Il peut en effet être avantageux de dissiper les calories sur une surface plus grande que celle qui entoure les canaux internes d'un dispositif de raccordement. C'est la raison pour laquelle l'invention couvre un support qui reçoit certains composants constitutifs du système d'approvisionnement et/ou de distribution en liquide ou de l'installation d'essuyage, ce support étant fabriqué en un matériau plastique thermoconducteur.

Avantageusement, le support et le dispositif de raccordement forment une pièce monobloc, le dispositif de fixation étant par exemple issu de matière avec le support. Avantageusement encore, le dispositif de raccordement est issu de matière avec le support.

Selon une sixième variante alternative ou complémentaire aux variantes précédentes, le composant est un connecteur hydraulique installé entre au moins un conduit de transport et de chauffage constitutif du dispositif d'approvisionnement et/ou de distribution et un balai d'essuyage du système d'essuyage. Un tel connecteur hydraulique est enfilé dans une pièce d'accrochage du balai et reçoit le liquide par l'intermédiaire d'un ou plusieurs conduits montés de manière étanche sur une extrémité du connecteur hydraulique.

Avantageusement, le connecteur hydraulique comprend au moins un canal de circulation du liquide formant l'espace et une zone de contact apte à recevoir un élément chauffant. Selon un exemple, le connecteur hydraulique comprend deux canaux de circulation du liquide formant l'espace, de manière à projeter le liquide sur la vitre de part et d'autre du balai d'essuyage.

L'invention couvre encore un système d'approvisionnement et/ou de distribution en liquide d'une installation d'essuyage pour véhicule automobile, caractérisé en ce qu'il comprend au moins un composant tel que celui ou ceux listés ci-dessus. L'invention couvre ainsi un système d'approvisionnement et/ou de distribution en liquide comprenant un unique composant fabriqué en un matériau thermoconducteur tel que notamment, le réservoir, le dispositif de raccordement ou le connecteur hydraulique.

Il va de soi que l'invention couvre également un système d'approvisionnement et/ou de distribution comprenant des tubes et des conduits de transport et de chauffage de liquide comprenant un élément chauffant et une pluralité de composants réalisés en un matériau plastique thermoconducteur parmi lesquels on trouve un réservoir, une pompe, un raccord hydraulique, un dispositif de raccordement et un connecteur hydraulique.

Un tout premier avantage selon l'invention réside dans la possibilité de chauffer beaucoup plus efficacement une zone froide où le gel s'est formé car toute la périphérie de l'espace est formée par une paroi qui transporte les calories.

Un autre avantage réside dans la possibilité de réduire la puissance électrique nécessaire pour assurer le chauffage de ce composant puisque celle-ci se trouve mieux répartie tout autour de l'espace contenant le liquide.

D'autres caractéristiques, détails et avantages de l'invention ressortiront plus clairement à la lecture de la description donnée ci-après à titre indicatif en relation avec des dessins dans lesquels :
- la figure 1 est une vue générale du système d'approvisionnement et/ou de distribution en liquide et de l'installation d'essuyage, comprenant au moins un composant selon l'invention,
- la figure 2 est une vue en perspective montrant le support équipé d'un dispositif de raccordement selon l'invention,
- la figure 3 est une vue en perspective d'un composant selon l'invention sous la forme d'une pompe,
- la figure 4 est une vue en perspective montrant un composant selon l'invention sous la forme d'un raccord hydraulique,
- la figure 5 est une vue en perspective d'un composant selon l'invention sous la forme d'un réservoir,
- la figure 6 est une vue en perspective d'un composant selon l'invention sous la forme d'un connecteur hydraulique.

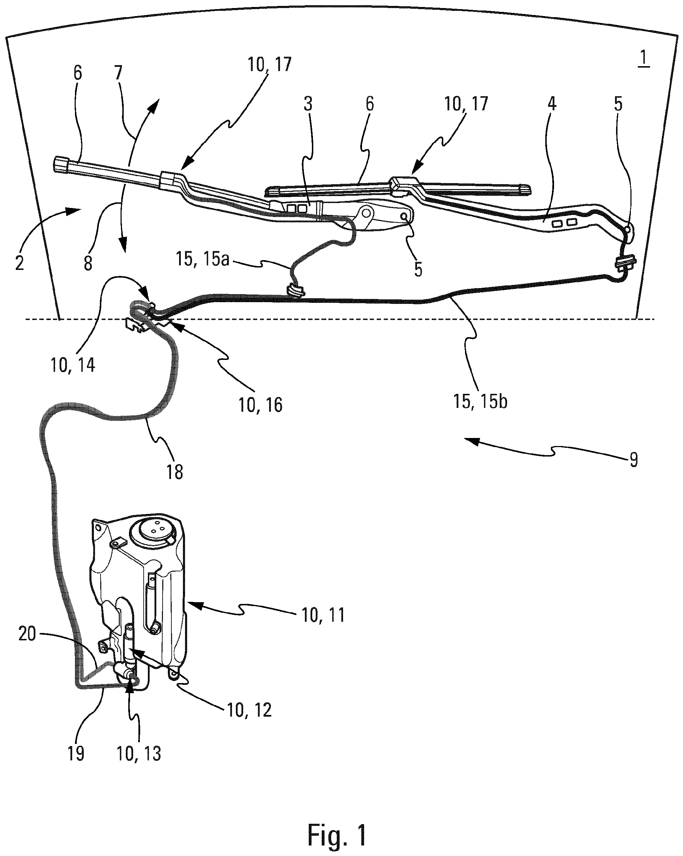

La figure 1 est une vue illustrant un pare-brise 1 de véhicule automobile destiné à être essuyé par une installation d'essuyage 2. Cette dernière comprend un premier bras 3 et un deuxième bras 4 chacun relié, par exemple, à un axe de rotation 5. Ces deux bras se déplacent sur le pare-brise 1 selon un mouvement combiné de va-et-vient ou selon un mouvement antagoniste de va-et-vient.

A l'extrémité opposée à l'axe 5 par rapport au premier bras 3 et au deuxième bras 4, on trouve un balai d'essuyage 6 dont la fonction est de racler le pare-brise pour repousser l'eau présente sur ce dernier en des zones du pare-brise qui ne gênent pas la visibilité. Ces balais d'essuyage 6 sont reliés à chaque bras par un connecteur amovible autorisant un remplacement du balai d'essuyage quand celui-ci est usé.

Les balais d'essuyage comprennent au moins une rampe de projection d'un liquide, notamment un liquide lave-glace. Avantageusement, un même balai d'essuyage comprend deux rampes de projection réparties de part et d'autre de son axe longitudinal d'extension. Ces rampes s'étendent longitudinalement dans un même axe qu'un axe longitudinal du balai d'essuyage 6. Ces rampes sont disposées de part et d'autre du balai d'essuyage, selon son axe longitudinal, de manière à projeter le liquide lave-glace en avant du balai quand celui-ci se déplace selon un premier sens de déplacement illustré par la flèche 7 ou selon un deuxième sens de déplacement illustré par la flèche 8.

Cette figure 1 montre aussi la présence d'un système d'approvisionnement et/ou de distribution 9 en liquide lave-glace équipant le véhicule. Pour que les rampes projettent ce liquide, il est nécessaire de disposer d'un stock de liquide lave-glace, d'un moyen pour transporter ce liquide entre le stock et les rampes et d'un moyen de mettre en circulation ce liquide depuis ce stock vers les rampes.

Le système d'approvisionnement et/ou de distribution 9 en liquide comprend au moins un composant 10 réalisé en un matériau plastique thermoconducteur. Le caractère plastique du matériau permet de fabriquer ce composant de manière aisée, par exemple par moulage, tout en maintenant un coût de revient compatible avec les contraintes économiques du secteur automobile. Le caractère thermoconducteur du composant garantit que, lorsque celui-ci est en contact avec une source de chaleur, on réchauffe le composant, puis on maintient ce composant à une température qui empêche le liquide qui s'étend dans le composant de geler.

Le composant 10 selon l'invention comprend ainsi au moins un espace dans lequel le liquide s'étend, cet espace étant bordé ou délimité par une paroi. On comprend de ceci que cet espace peut servir à retenir le liquide mais il peut également être parcouru par ce liquide quand le système d'approvisionnement et/ou de distribution 9 en liquide est actionné. Cet espace forme un creux délimité par la paroi, cette dernière étant réalisée en un matériau plastique thermoconducteur.

Ce composant 10 peut être, notamment :
- un réservoir 11 de rétention du liquide,
- une pompe 12 assurant la mise en circulation du liquide dans le système d'approvisionnement et/ou de distribution 9,
- un raccord hydraulique 13 destiné à relier la pompe 12 à un tube 18 de transport et de chauffage du liquide,
- un dispositif de raccordement 14 installé entre le tube 18 relié à la pompe 12 et un conduit 15 de transport et de chauffage du liquide relié au balai d'essuyage 6,
- un support 16 apte à rassembler mécaniquement le dispositif de raccordement 14 et un ou plusieurs connecteurs électriques qui alimentent électriquement les éléments chauffants noyés à l'intérieur du tube 18 et/ou du conduit 15 et des éléments chauffants intégrés au balai d'essuyage,
- un connecteur hydraulique 17 installé entre au moins le conduit 15 de transport et de chauffage de liquide et le balai d'essuyage.

Le système d'approvisionnement et/ou de distribution en liquide 9 comprend le tube 18 et des conduits 15. Le tube 18 relie la pompe 12 au dispositif de raccordement 14. Les conduits 15 relient le dispositif de raccordement 14 au connecteur hydraulique 17, au niveau de la fixation du balai sur le bras d'essuyage.

Pour ces deux moyens de transport du liquide, Il s'agit d'une canalisation, par exemple, flexible qui délimite deux canaux 19 et 20 à l'intérieur desquels le liquide est apte à circuler. Ce tube 18 ou ces conduits 15 comprennent encore un élément chauffant (non visible sur la figure 1) qui chemine le long des canaux, soit en étant noyé dans la matière constitutive de la canalisation, soit en cheminant à la périphérie et contre le tube ou le conduit. Un tel élément chauffant est un élément résistif, qui prend par exemple la forme de deux brins de fil électrique qui, lorsqu'il est parcouru par un courant électrique, dégage des calories.

On notera que cet élément chauffant du tube 18 ou des conduits 15 forme un exemple d'une source de chaleur à partir de laquelle le composant 10 puise l'énergie et la dissipe tout autour de l'espace apte à contenir le liquide.

De manière alternative ou complémentaire à cette première variante de source de chaleur, les composants peuvent notamment comprendre une source de chaleur dédiée à chaque composant et distincte de celle utilisée pour le tube 18 ou les conduits 15, la matière plastique thermoconductrice du composant 10 permettant de drainer les calories générées par la source de chaleur dédiée.

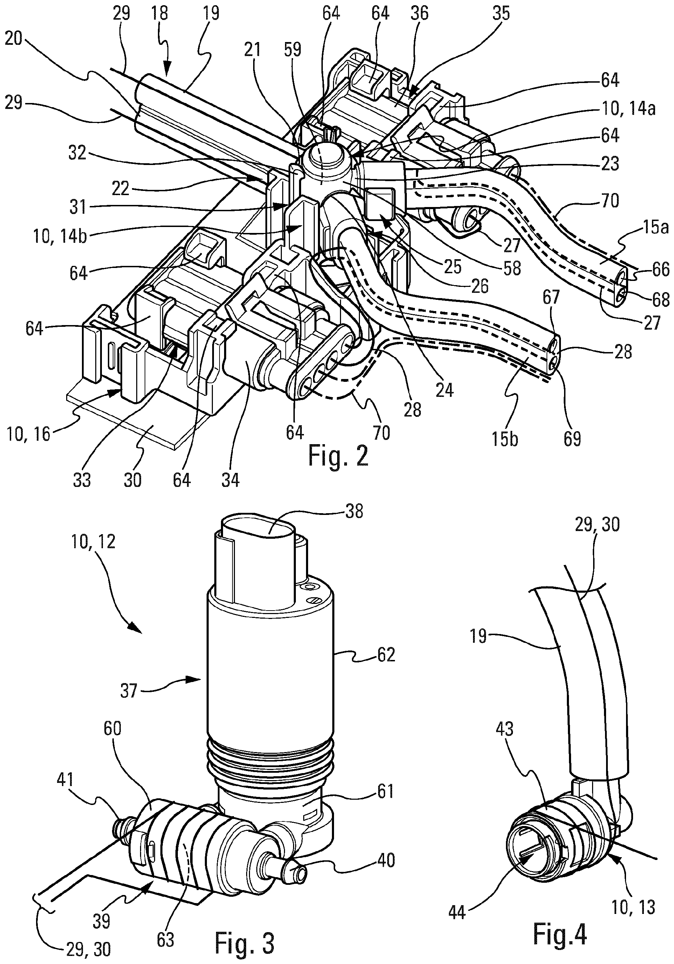

La figure 2 montre un exemple de réalisation d'un ou plusieurs composants conformes à l'invention.

Ce composant 10 est notamment un premier dispositif de raccordement 14a. Il est délimité par une paroi 58 qui ferme un espace 59 dans lequel le liquide qui s'étend est en communication avec une première entrée 21. La première entrée 21 reçoit une extrémité du premier canal 19 constitutif du tube 18, la première entrée 21 pénétrant à l'intérieur de ce premier canal. Cet espace est encore en communication avec une première sortie 23 et une deuxième sortie 24 qui sont respectivement raccordées à une première canalisation 66 d'un premier conduit 15a et à une première canalisation 67 d'un deuxième conduit 15b, le premier conduit 15a et le deuxième conduit 15b étant destinés à transporter et chauffer le liquide vers les balais d'essuyage.

Avantageusement, il est prévu un deuxième dispositif de raccordement 14b réalisé de manière identique au premier dispositif de raccordement 14a. L'espace à l'intérieur du deuxième dispositif de raccordement 14b est en communication avec une deuxième entrée 22. Cette dernière reçoit une extrémité d'un deuxième canal 20 constitutif avec le premier canal 19 du tube 18, la deuxième entrée 22 pénétrant à l'intérieur du deuxième canal. Cet espace est encore en communication avec une troisième sortie 25 et une quatrième sortie 26 qui sont respectivement raccordées à une deuxième canalisation 68 du premier conduit 15a et à une deuxième canalisation 69 du deuxième conduit 15b.

Selon une variante de l'invention, le premier dispositif de raccordement 14a chevauche le deuxième dispositif de raccordement 14b. Bien que relié mécaniquement au deuxième dispositif de raccordement 14b, le premier dispositif de raccordement 14a peut être une pièce distincte du deuxième dispositif de raccordement 14b. Ils peuvent être assemblés mécaniquement l'un à l'autre par un élément de fixation, notamment formé par un support 16 ou par une pièce distincte du support 16.

Conformément à l'invention, la matière utilisée pour fabriquer le premier dispositif de raccordement 14a et/ou le deuxième dispositif de raccordement 14b est plastique et thermoconductrice, de sorte à drainer les calories générées par des éléments chauffant 27 et/ou 28 présents dans les premier et deuxième conduits 15a et 15b. De manière similaire, un élément chauffant 29 qui chemine dans ou autour du tube 18 forme une source de chaleur mise à profit par les dispositifs de raccordement pour empêcher la formation de gel dans l'espace interne de ces dispositifs de raccordement.

Le premier dispositif de raccordement 14a et/ou le deuxième dispositif de raccordement 14b comprennent chacun un clapet anti-retour disposé dans l'espace, c'est-à-dire entre son entrée et ses deux sorties. Un tel clapet évite que les premiers et deuxièmes canaux 66 à 69 ne se vident dans le réservoir quand le système d'approvisionnement et/ou de distribution n'est pas utilisé. On assure ainsi une disponibilité immédiate de la fonction lave-glace, sans attendre le remplissage des conduits 15a et/ou 15b.

Selon une variante alternative ou complémentaire, le composant 10 est réalisé par le support 16 fabriqué en un plastique thermoconducteur. Outre la conduction thermique, ce support 16 présente une fonction de maintien mécanique du ou des dispositifs de raccordement évoqués plus haut et d'au moins un connecteur électrique.

Selon une variante, la source de chaleur peut être mise en oeuvre par une source dédiée 30, par exemple disposé sous le support 16 et en contact avec ce dernier. De manière alternative ou complémentaire, la source de chaleur peut être mise en oeuvre par les éléments chauffants 27, 28 ou 29, le cheminement des brins étant alors organisé pour qu'au moins l'un des éléments chauffants soit au contact du support 16.

Le support 16 comprend une première cavité 31 dans laquelle se loge le ou les dispositifs de raccordement 14a et 14b, ceux-ci étant retenus sur le support 16 par une griffe 32. Il comprend encore une deuxième cavité 33 dans laquelle se loge un premier connecteur électrique 34 et une troisième cavité 35 dans laquelle est installé un deuxième connecteur électrique 36.

Le support 16 comprend, pour chaque connecteur électrique, un dispositif de fixation 64 de ceux-ci. Il s'agit par exemple de crochet issu de matière avec le support 16 qui vient emprisonner chaque connecteur électrique 34, 36 dans la deuxième cavité 33 ou dans la troisième cavité 35. A titre d'illustration, le moyen de fixation 64 comprend quatre crochets.

Chacun de ces connecteurs comprend quatre voies, deux de ces voies étant destinées à alimenter les éléments résistifs chauffants installés sur le balai via un câble 70 alors que les deux autres voies alimentent électriquement un élément chauffant 27 ou 28 qui chemine dans le premier conduit 15a ou dans le deuxième conduit 15b.

Selon une variante de l'invention, le support 16 et le ou les dispositifs de raccordement 14a, 14b forment une seule et même pièce. On comprend de ceci que le support 16 et le dispositif de raccordement sont issus de la même matière et fabriqués au cours d'une même opération de moulage. Ces deux pièces forment ainsi un ensemble monobloc.

La figure 3 montre une variante du composant 10 selon l'invention. Ce composant prend ici la forme d'une pompe 12 dont la fonction est d'assurer la mise en circulation du liquide dans le système d'approvisionnement et/ou de distribution.

Cette pompe 12 comprend un corps 37 tubulaire qui loge un moteur électrique alimenté par un connecteur électrique 38. Ce corps 37 loge également une turbine et se termine par un distributeur hydraulique 39, ce dernier comprenant une première sortie 40 et une deuxième sortie 41. La paroi thermoconductrice du composant selon l'invention est ici formée au moins par la paroi 60 du distributeur hydraulique 39, par une première partie 61 du corps tubulaire 37 qui entoure la turbine et éventuellement par une deuxième partie 62 du corps tubulaire 37 qui entoure le moteur électrique. L'espace recevant le liquide est quant à lui formé par la zone 63 où le liquide s'étend dans la pompe 12, cet espace s'étend au niveau de la première partie 61 qui entoure la turbine et/ou à l'intérieur du distributeur hydraulique 39.

Ainsi, au moins une partie du corps 37 et le distributeur hydraulique 39 de la pompe sont fabriqués dans une matière plastique thermoconductrice, ce qui permet de dégeler le liquide présent dans le corps 37 ou le distributeur 39, puis d'éviter que le liquide présent dans ce distributeur hydraulique 39, par exemple, ne se fige quand la température environnant la pompe 12 devient négative.

Ici aussi, la source de chaleur peut être une source dédiée référencée 30 mais cette source peut avantageusement être réalisée par l'élément chauffant 29 qui coopère avec le tube de transport et de chauffage du liquide 18.

La figure 4 illustre une autre variante de réalisation du composant 10. Celui-ci prend la forme du raccord hydraulique 13 qui assure un lien hydraulique entre l'une ou l'autre des sorties de la pompe 40 ou 41 et un canal 19 ou 20 constitutif du tube 18 de transport et de chauffage du liquide.

Le raccord hydraulique 13 est formé par une paroi 43 qui entoure l'espace 44 dans lequel le liquide circule. Le raccord hydraulique comprend deux portions qui s'étendent, notamment, selon des directions perpendiculaires, une première portion étant enfilée dans au moins un canal 19, 20 du tube 18 alors qu'une deuxième portion formée par la paroi 43 vient recouvrir la sortie de la pompe sur laquelle ladite deuxième portion est montée. Bien entendu, les deux portions du raccord hydraulique peuvent être alignées sur un même axe.

Un tel raccord hydraulique est fabriqué à partir d'un matériau plastique thermoconducteur. Une source de chaleur dédiée 30 peut être en contact physique avec le raccord hydraulique 13 mais cette source peut avantageusement être réalisée par l'élément chauffant 29 qui coopère avec le tube de transport et de chauffage du liquide. Un tel élément chauffant 29 est accolé au raccord hydraulique 13 de manière à fournir des calories à celui-ci. Sur cette figure, on constate que l'élément chauffant 29 est enroulé autour d'au moins une des portions du raccord hydraulique, et notamment autour de la paroi 43.

On notera enfin que ce raccord hydraulique 13 comprend des moyens de connexion rapide sur un embout formé par la première sortie ou la deuxième sortie de la pompe.

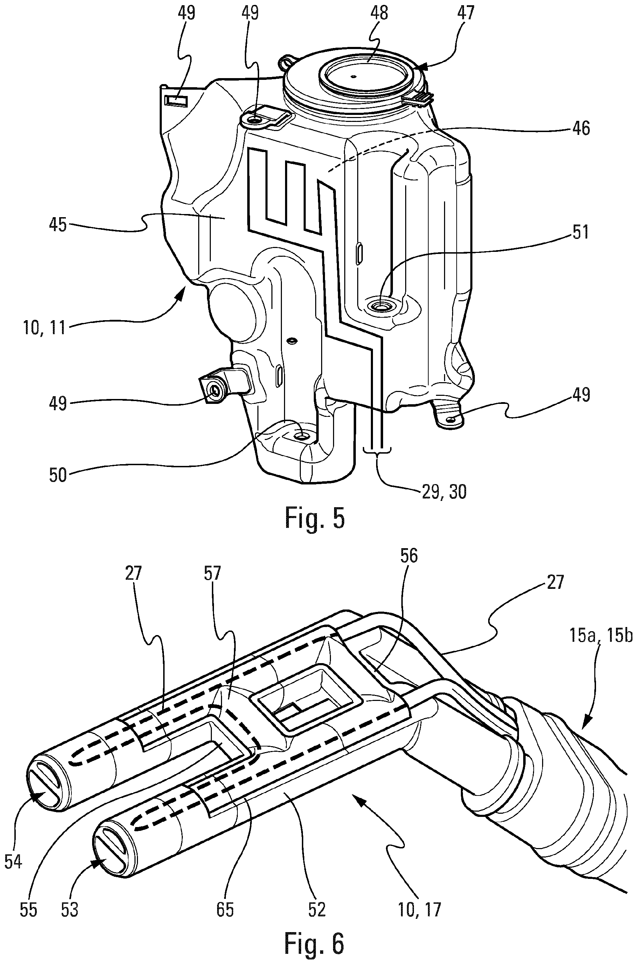

La figure 5 montre un composant 10 dans une variante où il prend la forme d'un réservoir 11 de rétention du liquide lave-glace. Dans un tel cas, une paroi 45 définit un espace 46 dans lequel le liquide est retenu ou stocké en vue de son utilisation.

Un tel réservoir 11 comprend un orifice 47 de remplissage en liquide de l'espace 46. Cet orifice 47 est fermé par un bouchon 48. Ce réservoir comprend encore au moins un dispositif de fixation 49 apte à maintenir mécaniquement le réservoir sur le véhicule, notamment par l'intermédiaire de vis.

Le réservoir 11 comprend encore un premier trou 50 apte à recevoir la pompe de mise en circulation du liquide dans le système d'approvisionnement et/ou de distribution. Le réservoir comprend un deuxième trou 51 destiné à recevoir une deuxième pompe, notamment utilisé pour projeter le liquide lave-glace sur les phares du véhicule ou sur la lunette arrière de celui-ci. Dans le prolongement de chacun de ces trous, on trouve un logement qui reçoit le corps de la pompe évoquée plus haut.

Une source de chaleur dédiée 30 peut être en contact physique avec la paroi 45 du réservoir 11, notamment sous la forme d'une piste résistive et chauffante qui chemine sur la face externe de cette paroi. Alternativement ou de manière complémentaire, cette source de chaleur peut être mise en oeuvre par l'élément chauffant 29 qui provient du tube de transport et de chauffage du liquide 18.

La paroi 45 du réservoir 11 est fabriquée ou moulée à partir d'un matériau plastique thermoconducteur, ce qui permet de répartir les calories générées par la source de chaleur uniformément autour de l'espace 46 et ainsi empêcher la formation de gel dans le réservoir.

La figure 6 montre encore une autre variante de réalisation du composant 10 selon l'invention. Celui-ci prend la forme d'un connecteur hydraulique 17 apte à être installé au niveau de la liaison entre le bras d'essuyage et le balai d'essuyage. Pour un système d'essuyage, on trouve ainsi deux connecteurs hydrauliques, chacun dédié à un couple formé par un bras d'essuyage et un balai d'essuyage.

Un tel connecteur comprend une paroi 52 qui délimite un premier espace et un deuxième espace dans lesquels le liquide est apte à s'étendre ou circuler. Il s'agit de canaux référencés 53 et 54 chargés de canaliser le liquide entre un premier conduit 15a, 15b dédié à un bras d'essuyage et une pièce d'accrochage solidaire du balai d'essuyage.

Le connecteur hydraulique 17 comprend encore un premier pontet 55 et un deuxième pontet 56 qui s'étendent chacun entre des parois 52 délimitant les canaux 53 et 54.

Le matériau constitutif du connecteur hydraulique 17 est un plastique thermoconducteur, ce qui permet de drainer des calories créées par une source de chaleur. Selon un exemple de réalisation, une telle source de chaleur est mise en oeuvre par l'élément chauffant 27 qui chemine dans le premier conduit 15a solidaire d'un bras d'essuyage. Cet élément chauffant est physiquement en appui sur le connecteur hydraulique 17 au niveau d'une zone de contact 65, notamment formé par un méplat ménagé sur la paroi 52 du connecteur hydraulique 17.

L'élément chauffant chemine sur la paroi 52, au niveau de la zone de contact 65, jusqu'à une extrémité d'un des canaux opposées au premier conduit 15a, 15b, puis passe vers l'autre canal en cheminant sur le premier pontet 55. Le brin résistif formant l'élément chauffant 27 se dirige ensuite vers l'extrémité du deuxième canal opposée au premier conduit 15a, 15b. On assure ainsi une fourniture de calories que le connecteur hydraulique 17 réparti dans l'espace formé par les deux canaux 53 et 54.

On notera que le connecteur hydraulique 17 peut comprendre un moyen de réception, notamment issu de matière avec le connecteur hydraulique 17, d'un connecteur électrique destiné à alimenter un dispositif chauffant intégré au balai. Il s'agit, par exemple, d'une anse ou d'un cerclage délimitant un volume dans lequel ce connecteur électrique s'étend.

Selon un exemple de réalisation, l'élément chauffant 27 qui chemine sur le composant 10 est maintenu solidaire de celui-ci au moyen d'une résine 57, cette dernière s'étendant sur une face supérieure du connecteur hydraulique, notamment au droit de la zone de contact 65.

Une telle résine garantit le contact physique entre la source de chaleur et le composant 10 selon l'invention et protège l'élément chauffant des agressions extérieures, tout en empêchant que l'utilisateur du véhicule ne se brûle en manipulant le composant 10.

Le matériau plastique utilisé pour fabriquer le composant selon les variantes détaillées ci-dessus est considéré comme thermoconducteur dès lors que sa diffusivité thermique dépasse 0.00019 m²/s. Un tel matériau plastique est par exemple un polyéthylène chargé, par exemple par des nanofibres.

Selon un autre exemple, le matériau est un :
- Polysulfure de phénylène (PPS FV 40) chargé de fibres de verre, notamment à 40%, dont la diffusivité thermique est au moins égale à 0.00019 m²/s,
- un polyoxymethylene dont la diffusivité thermique est au moins égale à 0.00020 m²/s,
- un Polysulfure de phénylène (PPS) chargé de fibres de verre, notamment à 40%, et chargé de céramique, dont la diffusivité thermique est au moins égale à 0.00019 m²/s,
- un polyéthylénimine (PEI) dont la diffusivité thermique est au moins égale à 0.00033 m²/s,
- un Polysulfure de phénylène (PPS) chargé de fibres longues dont la diffusivité thermique est au moins égale à 0.00037 m²/s,
- un Polysulfure de phénylène (PPS M65) avec 65 % de charges minérales dont la diffusivité thermique est au moins égale à 0.00052 m²/s.

## Revendications

1. Composant (10) d'un système d'approvisionnement et/ou de distribution (9) en liquide d'une installation d'essuyage pour véhicule automobile, comprenant un espace (44, 46 53, 54, 59, 63) délimité par une paroi (43, 45, 52, 58, 60 à 62) dans lequel le liquide est apte à s'étendre, **caractérisé en ce que** la paroi (43, 45, 52, 58, 60 à 62) est réalisée en un matériau plastique thermoconducteur présentant une diffusivité thermique supérieure ou égale à 0.00019 m²/s.

2. Composant selon la revendication 1, formant un réservoir (11) de rétention du liquide, ladite paroi (45) comprenant au moins un orifice (47) de remplissage dudit espace (46) en liquide et au moins un trou (50) apte à recevoir une pompe (12) de mise en circulation du liquide dans le système d'approvisionnement et/ou de distribution (9).

3. Composant selon la revendication 1, formant une pompe (12) de mise en circulation du liquide dans le système d'approvisionnement et/ou de distribution (9).

4. Composant selon la revendication 1, formant un raccord hydraulique (13) entre une pompe (12) de mise en circulation du liquide et au moins un tube (18) de transport et de chauffage du liquide constitutif du système d'approvisionnement et/ou de distribution en liquide (9).

5. Composant selon la revendication 1, formant un dispositif de raccordement (14) dans lequel l'espace (59) est en communication avec au moins une entrée (21, 22) de liquide et au moins une sortie (23, 24, 25, 26) de liquide, ledit espace (59) logeant au moins un clapet anti-retour ; de préférence, l'espace (59) est en communication avec au moins deux sorties de liquide.

6. Composant selon la revendication 5, formant un support (16) du dispositif de raccordement (14, 14a, 14b), ledit support (16) comprenant au moins un dispositif de fixation (64) apte à solidariser un connecteur électrique (34, 36) d'alimentation d'au moins un élément chauffant (27, 28, 29) constitutif du système d'approvisionnement et/ou de distribution (9).

7. Composant selon la revendication 6, dans lequel le support (16) et au moins un dispositif de raccordement (14, 14a, 14b) forment une pièce monobloc.

8. Composant selon la revendication 1, formant un connecteur hydraulique (17) installé entre au moins un conduit (15, 15a, 15b) de transport et de chauffage de liquide constitutif du dispositif d'approvisionnement et/ou de distribution (9) et un balai d'essuyage (6) du système d'essuyage.

9. Composant selon la revendication 8, dans lequel le connecteur hydraulique (17) comprend au moins un canal (53, 54) de circulation du liquide formant l'espace et une zone de contact (65) apte à recevoir un élément chauffant (27, 28, 29) ; de préférence, le connecteur hydraulique comprend au moins deux canaux de circulation du liquide.

10. Système d'approvisionnement et/ou de distribution (9) en liquide d'une installation d'essuyage pour véhicule automobile, **caractérisé en ce qu'**il comprend au moins un composant (10) selon l'une quelconque des revendications précédentes.

## Patentansprüche

1. Bauteil (10) für ein System zur Zufuhr und/oder Verteilung (9) einer Flüssigkeit einer Wischanlage für ein Kraftfahrzeug, umfassend einen Raum (44, 46, 53, 54, 59, 63), der von einer Wand (43, 45, 52, 58, 60 bis 62) begrenzt ist, in dem sich die Flüssigkeit ausbreiten kann, **dadurch gekennzeichnet, dass** die Wand (43, 45, 52, 58, 60 bis 62) aus einem wärmeleitenden Kunststoffmaterial hergestellt ist, das eine Temperaturleitfähigkeit von größer oder gleich 0,00019 m²/s aufweist.

2. Bauteil nach Anspruch 1, wobei das Bauteil einen Flüssigkeitsrückhaltebehälter (11) bildet, wobei die Wand (45) mindestens eine Öffnung (47) zum Füllen des Raums (46) mit Flüssigkeit und mindestens ein Loch (50) umfasst, das eine Pumpe (12) zum Zirkulieren der Flüssigkeit in dem System zur Zufuhr und/oder Verteilung (9) aufnehmen kann.

3. Bauteil nach Anspruch 1, wobei das Bauteil eine Pumpe (12) zum Zirkulieren der Flüssigkeit in dem System zur Zufuhr und/oder Verteilung (9) bildet.

4. Bauteil nach Anspruch 1, wobei das Bauteil eine hydraulische Kopplung (13) zwischen einer Pumpe (12) zum Zirkulieren der Flüssigkeit und mindestens einem Rohr (18) zum Transportieren und Erwärmen der Flüssigkeit bildet, das Bestandteil des Systems zur Versorgung und/oder Verteilung von Flüssigkeit (9) ist.

5. Bauteil nach Anspruch 1, wobei das Bauteil eine Kopplungsvorrichtung (14) bildet, in der der Raum (59) mit mindestens einem Flüssigkeitseinlass (21, 22) und mindestens einem Flüssigkeitsauslass (23, 24, 25, 26) in Verbindung steht, wobei in dem Raum (59) mindestens ein Rückschlagventil untergebracht ist; wobei der Raum (59) vorzugsweise mit mindestens zwei Flüssigkeitsauslässen in Verbindung steht.

6. Bauteil nach Anspruch 5, wobei das Bauteil einen Träger (16) für die Kopplungsvorrichtung (14, 14a, 14b) bildet, wobei der Träger (16) mindestens eine Befestigungsvorrichtung (64) umfasst, die einen elektrischen Verbinder (34, 36) zur Versorgung mindestens eines Heizelements (27, 28, 29) fest verbinden kann, das Bestandteil des Systems zur Zufuhr und/oder Verteilung (9) ist.

7. Bauteil nach Anspruch 6, wobei der Träger (16) und mindestens eine Kopplungsvorrichtung (14, 14a, 14b) ein einstückiges Teil bilden.

8. Bauteil nach Anspruch 1, wobei das Bauteil einen hydraulischen Verbinder (17) bildet, der zwischen mindestens einer Leitung (15, 15a, 15b) zum Transportieren und Erwärmen der Flüssigkeit, die Bestandteil der Vorrichtung zur Zufuhr und/oder Verteilung (9) ist, und einem Wischerblatt (6) des Wischsystems angeordnet ist.

9. Bauteil nach Anspruch 8, wobei der hydraulische Verbinder (17) mindestens einen Kanal (53, 54) zum Zirkulieren der Flüssigkeit, der den Raum bildet, und eine Kontaktzone (65) umfasst, die ein Heizelement (27, 28, 29) aufnehmen kann; wobei der hydraulische Verbinder vorzugsweise mindestens zwei Kanäle zum Zirkulieren der Flüssigkeit umfasst.

10. System zur Zufuhr und/oder Verteilung (9) einer Flüssigkeit einer Wischanlage für ein Kraftfahrzeug, **dadurch gekennzeichnet, dass** es mindestens ein Bauteil (10) nach einem der vorhergehenden Ansprüche umfasst.

## Claims

1. A component (10) of a liquid supply and/or distribution system (9) of a wiping installation for a motor vehicle, comprising a space (44, 46, 53, 54, 59, 63) delimited by a wall (43, 45, 52, 58, 60 to 62) in which the liquid can spread, **characterized in that** the wall (43, 45, 52, 58, 60 to 62) is made of a heat-conducting plastic material exhibiting a thermal diffusivity greater than or equal to 0.00019 m²/s.

2. The component as claimed in claim 1, forming a liquid retention tank (11), said wall (45) comprising at least one orifice (47) for filling said space (46) with liquid and at least one hole (50) suitable for receiving a pump (12) for circulating the liquid in the supply and/or distribution system (9).

3. The component as claimed claim 1, forming a pump (12) for circulating the liquid in the supply and/or distribution system (9).

4. The component as claimed in claim 1, forming a hydraulic coupling (13) between a pump (12) for circulating the liquid and at least one constituent liquid transport and heating tube (18) of the liquid supply and/or distribution system (9).

5. The component as claimed in claim 1, forming a coupling device (14) in which the space (59) is in communication with at least one liquid inlet (21, 22) and at least one liquid outlet (23, 24, 25, 26), said space (59) housing at least one non-return valve; preferably, the space (59) is in communication with at least two liquid outlets.

6. The component as claimed in claim 6, forming a support (16) for the coupling device (14, 14a, 14b), said support (16) comprising at least one fastening device (64) suitable for securing an electrical power supply connector (34, 36) of at least one constituent heating element (27, 28, 29) of the supply and/or distribution system (9).

7. The component as claimed in claim 6, in which the support (16) and at least one coupling device (14, 14a, 14b) form a single-piece part.

8. The component as claimed in claim 1, forming a hydraulic connector (17) installed between at least one constituent liquid transport and heating duct (15, 15a, 15b) of the supply and/or distribution device (9) and a wiper (6) of the wiping system.

9. The component as claimed in claim 8, in which the hydraulic connector (17) comprises at least one liquid circulation channel (53, 54) forming the space and a contact zone (65) suitable for receiving a heating element (27, 28, 29); preferably, the hydraulic connector comprises at least two liquid circulation channels.

10. A liquid supply and/or distribution system (9) of a wiping installation for a motor vehicle, **characterized in that** it comprises at least one component (10) as claimed in any one of the preceding claims.
